# EUROPÄISCHE PATENTSCHRIFT

(11) **EP 1 785 450 B1**
(45) Veröffentlichungstag und Bekanntmachung des Hinweises auf die Patenterteilung: **04.02.2009**
(21) Anmeldenummer: 06023009.1
(22) Anmeldetag: 06.11.2006
(51) Int. Cl.: C08J 7/04

(54) **Polymerbeschichtung mit verbesserter Lösungsmittelbeständigkeit**
Polymeric coating with improved solvent resistance
Recouvrements polymères avec une résistance accrue aux solvants

(30) Priorität: 10.11.2005 DE 102005053646
(43) Veröffentlichungstag der Anmeldung: 16.05.2007
(73) Patentinhaber: H.C. Starck GmbH, 38642 Goslar (DE)
(72) Erfinder: Jonas, Friedrich, Dr., 52066 Aachen (DE); Guntermann, Udo, 47800 Krefeld (DE)
(74) Vertreter: Clauswitz, Kai-Uwe Wolfram

(56) Entgegenhaltungen:
- EP-A2- 0 564 911
- US-A1- 2003 144 465

## Beschreibung

Die vorliegende Erfindung betrifft Beschichtungen enthaltend elektrisch leitfähige Polymere und Melaminderivate, deren Herstellung und Verwendung sowie Dispersionen zur Herstellung solcher Beschichtungen.

Aus der Literatur sind Poly(3,4-alkylendioxythiophen)-Dispersionen zur Herstellung leitfähiger bzw. antistatischer Beschichtungen bekannt (s. z.B. EP-A 440 957). Solche Dispersionen werden zur Herstellung leitfähiger bzw. antistatischer Beschichtungen eingesetzt. In der Praxis hat es sich aber gezeigt, dass die Beschichtungen aus den Dispersionen für praktische Anwendungen nicht immer ausreichend stabil sind. Insbesondere gegen Lösungsmittel und/oder mechanische Beanspruchung sind die Beschichtungen oft nicht stabil genug.

Es wurde daher versucht die Beständigkeit der Beschichtungen gegen Lösungsmittel und/oder mechanische Beanspruchung durch Zugabe von Vernetzern z.B. auf Epoxisilanbasis (s. EP-A 564 911) zu verbessern. Diese Maßnahme allein reicht aber in vielen Fällen nicht aus, um insbesondere die Lösungsmittelbeständigkeit ausreichend zu verbessern.

Es bestand somit weiterhin Bedarf an leitfähigen bzw. antistatischen Beschichtungen mit verbesserter Lösungsmittelbeständigkeit gegenüber den bekannten Beschichtungen sowie an geeigneten Dispersionen zur Herstellung solcher Beschichtungen.

Die Aufgabe der vorliegenden Erfindung bestand somit in der Bereitstellung solcher Beschichtungen mit verbesserter Lösungsmittelbeständigkeit sowie geeigneter Dispersionen zu deren Herstellung.

Überraschend wurde nun gefunden, dass Dispersionen enthaltend wenigstens ein leitfähiges Polymer und wenigstens ein Melaminkondensat zur Herstellung von Beschichtungen mit solcher verbesserter Lösungsmittelbeständigkeit geeignet sind. Dies ist umso überraschender, da bekannt ist, dass üblicherweise die Zugabe von Polyaminen zu Poly(3,4-alkylendioxythiophen)-Dispersionen zur Vergelung und Ausfällung des leitfähigen Polymers führt. Eine solche Vergelung wird jedoch im Falle der vorliegenden Erfindung nicht beobachtet.

Gegenstand der vorliegenden Erfindung ist somit eine Dispersion enthaltend wenigstens ein elektrisch leitfähiges Polymer, wenigstens ein Gegenion und wenigstens ein Dispersionsmittel, dadurch gekennzeichnet, dass wenigstens ein Kondensat aus Melamin und wenigstens einer Carbonylverbindung enthalten ist.

Kondensate aus Melamin und wenigstens einer Carbonylverbindung sind bevorzugt solche aus Melamin und Aldehyden oder Ketonen. Geeignete Aldehyde oder Ketone sind beispielsweise Formaldehyd, Acetaldehyd, Butyraldehyd, Aceton oder Methylethylketon. Ein besonders bevorzugter Aldehyd ist Formaldehyd; besonders bevorzugte Kondensate aus Melamin und wenigstens einer Carbonylverbindung sind Melamin-Formaldehyd-Kondensate. Solche besonders bevorzugten Melamin-Formaldehyd-Kondensate können beispielsweise solche der allgemeinen Formel (II) sein 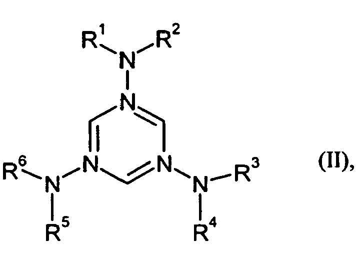 worin
- R¹ bis R⁶: unabhängig voneinander für H oder CH₂-OR⁷ stehen, wobei mindestens einer der Reste R¹ bis R⁶ von H verschieden ist und
R⁷ für H oder einen linearen oder verzweigten C₁-C₈-Alkylrest, bevorzugt für H oder einen linearen oder verzweigten C₁-C₄-Alkylrest steht,

Ganz besonders bevorzugt stehen die Reste R¹ bis R⁶ in solchen Kondensaten der allgemeinen Formel (II) alle für CH₂-OR⁷.

Weiterhin können solche besonders bevorzugten Melamin-Formaldehyd-Kondensate Kondensationsprodukte aus den Kondensaten der allgemeinen Formel (II) miteinander oder mit weiterem Melamin sein.

Die besonders bevorzugten Melamin-Formaldehyd-Kondensate können zudem partiell oder vollständig verethert sein. Zudem oder alternativ können die besonders bevorzugten Melamin-Formaldehyd-Kondensate durch Reaktion mit Aminen, Aminocarbonsäuren oder Sulfiten, um beispielsweise die Löslichkeit in Wasser zu erhöhen, oder durch Mischkondensation mit anderen gegenüber Aldehyden reaktiven Verbindungen, wie beispielsweise Phenolen (Melamin-Phenol-Formaldehyd-Harze) oder Harnstoffen (Melamin-Harnstoff-Formaldehyd-Harze) modifiziert sein.

Geeignete Kondensate aus Melamin und wenigstens einer Carbonylverbindung, insbesondere gegebenenfalls modifizierte und/oder gegebenenfalls partiell oder vollständig veretherte Melamin-Formaldehyd-Kondensate, sind kommerziell erhältlich.

Der Anteil an Kondensat aus Melamin und wenigstens einer Carbonylverbindung in der Dispersion beträgt 1 bis 30 Gew.-% bezogen auf das Gewicht der gesamten Dispersion. Bevorzugt liegt der Anteil an Kondensat aus Melamin und wenigstens einer Carbonylverbindung in der Dispersion bei 2 bis 15 Gew.-% bezogen auf das Gewicht der gesamten Dispersion.

Unter elektrisch leitfähigen Polymeren wird hier insbesondere die Verbindungsklasse der π-konjugierten Polymere verstanden, die nach Oxidation oder Reduktion eine elektrische Leitfähigkeit besitzen. Bevorzugt werden solche π-konjugierten Polymere unter leitfähigen Polymeren verstanden, die nach Oxidation im getrockneten Zustand eine spezifische Leitfähigkeit in der Größenordnung von mindestens 0,01 S cm⁻¹ besitzen.

Bevorzugt im Rahmen der Erfindung sind solche Dispersionen, worin wenigstens ein leitfähiges Polymer ein Polythiophen, Polyanilin oder Polypyrrol ist.

Besonders bevorzugt ist das oder die elektrisch leitfähigen Polymer(e) ausgewählt aus Polyalkylendioxythiophenen enthaltend wiederkehrende Einheiten der allgemeinen Formel (I) 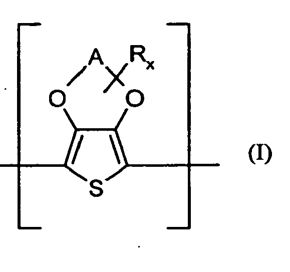 worin
- A: für einen gegebenenfalls substituierten C₁-C₅-Alkylenrest steht,
- R: für einen linearen oder verzweigten, gegebenenfalls substituierten C₁-C₁₈-Alkylrest, einen gegebenenfalls substituierten C₅-C₁₂-Cycloalkylrest, einen gegebenenfalls substituierten C₆-C₁₄-Arylrest, einen gegebenenfalls substituierten C₇-C₁₈-Aralkylrest, einen gegebenenfalls substituierten C₁-C₄-Hydroxyalkylrest oder einen Hydroxylrest steht,
- x: für eine ganze Zahl von 0 bis 8 steht und
für den Fall, dass mehrere Reste R an A gebunden sind, diese gleich oder unterschiedlich sein können.

Die allgemeinen Formeln (I) und (II) sind so zu verstehen, dass x Substituenten R an den Alkylenrest A gebunden sein können.

Besonders bevorzugt sind Polythiophene mit wiederkehrenden Einheiten der allgemeinen Formel (I), worin A für einen gegebenenfalls substituierten C₂-C₃-Alkylenrest und x für 0 oder 1 steht.

Ganz besonders bevorzugt ist wenigstens ein elektrisch leitfähiges Polymer Poly(3,4-ethylendioxythiophen), das gegebenenfalls substituiert ist.

Unter dem Präfix Poly- ist im Rahmen der Erfindung zu verstehen, dass mehr als eine gleiche oder verschiedene wiederkehrende Einheit im Polymeren bzw. Polythiophen enthalten ist. Die Polythiophene enthalten insgesamt n wiederkehrende Einheiten der allgemeinen Formel (I), wobei n eine ganze Zahl von 2 bis 2000, bevorzugt 2 bis 100, ist. Die wiederkehrenden Einheiten der allgemeinen Formel (I) können innerhalb eines Polythiophens jeweils gleich oder verschieden sein. Bevorzugt sind Polythiophene mit jeweils gleichen wiederkehrenden Einheiten der allgemeinen Formel (I).

An den Endgruppen tragen die Polythiophene bevorzugt jeweils H.

In bevorzugten Ausführungsformen der vorliegenden Erfindung enthalten die Dispersionen wenigstens ein Polyalkylendioxythiophen enthaltend wiederkehrende Einheiten der allgemeinen Formel (I), die im getrockneten Zustand eine spezifische Leitfähigkeit in der Größenordnung von mindestens 0,05 S cm⁻¹, bevorzugt von mindestens 0,5 S cm⁻¹ besitzen.

C₁-C₅-Alkylenreste A sind im Rahmen der Erfindung bevorzugt Methylen, Ethylen, n-Propylen, n-Butylen oder n-Pentylen.

C₁-C₄-Alkyl steht bevorzugt für lineare oder verzweigte C₁-C₄-Alkylreste wie Methyl, Ethyl, n- oder iso-Propyl, n-, iso-, sec- oder tert-Butyl, C₁-C₈-Alkyl steht darüber hinaus beispielsweise für n-Pentyl, 1-Methylbutyl, 2-Methylbutyl, 3-Methylbutyl, neo-Pentyl, 1-Ethylpropyl, Cyclohexyl, Cyclopentyl, n-Hexyl, 1,1-Dimethylpropyl, 1,2-Dimethylpropyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl, 1-Ethyl-2-methylpropyl oder 1-Ethyl-2-methylpropyl, C₁-C₁₈-Alkyl steht darüber hinaus beispielsweise für n-Nonyl, n-Decyl, n-Undecyl, n-Dodecyl, n-Tridecyl, n-Tetradecyl, n-Hexadecyl oder n-Octadecyl.

C₁-C₄-Hydroxyalkyl steht im Rahmen der Erfindung bevorzugt für einen geradkettigen, cyclischen, verzweigten oder unverzweigten C₁-C₄-Alkylrest, der mit einer oder mehreren, bevorzugt jedoch einer Hydroxygruppe substituiert ist.

C₅-C₁₂-Cycloalkylreste R stehen beispielsweise für Cyclopentyl, Cyclohexyl, Cycloheptyl, Cyclooctyl, Cyclononyl oder Cyclodecyl.

C₅-C₁₄-Arylreste R stehen beispielsweise für Phenyl oder Naphthyl, und C₇-C₁₈-Aralkylreste R beispielsweise für Benzyl, o-, m-, p-Tolyl, 2,3-, 2,4-, 2,5-, 2,6-, 3,4-, 3,5-Xylyl oder Mesityl. Die vorangehenden Aufzählungen dienen der beispielhaften Erläuterung der Erfindung und ist nicht als abschließend zu betrachten.

Als gegebenenfalls weitere Substituenten der Reste A und/oder der Reste R kommen im Rahmen der Erfindung zahlreiche organische Gruppen in Frage, beispielsweise Alkyl-, Cycloalkyl-, Aryl-, Aralkyl-, Alkoxy, Halogen-, Ether-, Thioether-, Disulfid-, Sulfoxid-, Sulfon-, Sulfonat-, Amino-, Aldehyd-, Keto-, Carbonsäureester-, Carbonsäure-, Carbonat-, Carboxylat-, Cyano-, Alkylsilan- und Alkoxysilangruppen sowie Carboxylamidgruppen.

Als Substituenten für Polyanilin oder Polypyrrol kommen beispielsweise die oben aufgeführten Reste A und R und/oder die weiteren Substituenten der Reste A und R in Frage. Bevorzugt sind unsubstituierte Polyaniline und Polypyrrole.

Der Rahmen der Erfindung umfasst alle oben stehenden und im Folgenden aufgeführten, allgemeinen oder in Vorzugsbereichen genannten Restedefinitionen, Parameter und Erläuterungen untereinander, also auch zwischen den jeweiligen Bereichen und Vorzugsbereichen in beliebiger Kombination.

Die als leitfähige Polymere in den Dispersionen eingesetzten Polythiophene können neutral oder kationisch sein. In bevorzugten Ausführungsformen sind sie kationisch, wobei sich "kationisch" nur auf die Ladungen bezieht, die auf der Polythiophenhauptkette sitzen. Je nach Substituent an den Resten R können die Polythiophene positive und negative Ladungen in der Struktureinheit tragen, wobei sich die positiven Ladungen auf der Polythiophenhauptkette und die negativen Ladungen gegebenenfalls an den durch Sulfonat- oder Carboxylatgruppen substituierten Resten R befinden. Dabei können die positiven Ladungen der Polythiophenhauptkette zum Teil oder vollständig durch die gegebenenfalls vorhandenen anionischen Gruppen an den Resten R abgesättigt werden. Insgesamt betrachtet können die Polythiophene in diesen Fällen kationisch, neutral oder sogar anionisch sein. Dennoch werden sie im Rahmen der Erfindung alle als kationische Polythiophene betrachtet, da die positiven Ladungen auf der Polythiophenhauptkette maßgeblich sind. Die positiven Ladungen sind in den Formeln nicht dargestellt, da ihre genaue Zahl und Position nicht einwandfrei feststellbar sind. Die Anzahl der positiven Ladungen beträgt jedoch mindestens 1 und höchstens n, wobei n die Gesamtanzahl aller wiederkehrenden Einheiten (gleicher oder unterschiedlicher) innerhalb des Polythiophens ist.

Zur Kompensation der positiven Ladung, soweit dies nicht bereits durch die gegebenenfalls Sulfonat- oder Carboxylat-substituierten und somit negativ geladenen Reste R erfolgt, benötigen die kationischen Polythiophene Anionen als Gegenionen.

Gegenionen können monomere oder polymere Anionen, letztere im Folgenden auch als Polyanionen bezeichnet, sein.

Polymere Anionen sind gegenüber monomeren Anionen bevorzugt, da sie zur Filmbildung beitragen und aufgrund ihrer Größe zu thermisch stabileren elektrisch leitfähigen Filmen führen. Jedoch können zusätzlich zu den polymeren Anionen auch monomere Anionen in den Dispersionen enthalten sein.

Polymere Anionen können hier beispielsweise Anionen polymerer Carbonsäuren, wie Polyacrylsäuren, Polymethacrylsäure oder Polymaleinsäuren, oder polymerer Sulfonsäuren, wie Polystyrolsulfonsäuren und Polyvinylsulfonsäuren. Diese Polycarbon- und -sulfonsäuren können auch Copolymere von Vinylcarbon- und Vinylsulfonsäuren mit anderen polymerisierbaren Monomeren, wie Acrylsäureestern und Styrol, sein.

Bevorzugt ist in den erfindungsgemäßen Dispersionen als Gegenion wenigstens ein Anion einer polymeren Carbon- oder Sulfonsäure enthalten.

Besonders bevorzugt als polymeres Anion ist das Anion der Polystyrolsulfonsäure (PSS).

Das Molekulargewicht der die Polyanionen liefernden Polysäuren beträgt vorzugsweise 1 000 bis 2 000 000, besonders bevorzugt 2 000 bis 500 000. Die Polysäuren oder ihre Alkalisalze sind im Handel erhältlich, z.B. Polystyrolsulfonsäuren und Polyacrylsäuren, oder aber nach bekannten Verfahren herstellbar (siehe z.B. Houben Weyl, Methoden der organischen Chemie, Bd. E 20 Makromolekulare Stoffe, Teil 2, (1987), S. 1141 u.f.).

Polymere(s) Anion(en) und elektrisch leitende Polymere können in der Dispersion insbesondere in einem Gewichtsverhältnis von 0,5:1 bis 50:1, bevorzugt von 1:1 bis 30:1, besonders bevorzugt 2:1 bis 20:1 enthalten sein. Das Gewicht der elektrisch leitfähigen Polymere entspricht hierbei der Einwaage der eingesetzten Monomere unter Annahme, dass bei der Polymerisation vollständiger Umsatz erfolgt.

Als monomere Anionen dienen beispielsweise solche von C₁-C₂₀-Alkansulfonsäuren, wie der Methan-, Ethan-, Propan-, Butan- oder höheren Sulfonsäuren wie der Dodecansulfonsäure, von aliphatischen Perfluorsulfonsäuren, wie der Trifluormethansulfonsäure, der Perfluorbutansulfonsäure oder der Perfluoroctansulfonsäure, von aliphatischen C₁-C₂₀-Carbonsäuren wie der 2-Ethylhexylcarbonsäure, von aliphatischen Perfluorcarbonsäuren, wie der Trifluoressigsäure oder der Perfluoroctansäure, und von aromatischen, gegebenenfalls durch C₁-C₂₀-Alkylgruppen substituierten Sulfonsäuren wie der Benzolsulfonsäure, o-Toluolsulfonsäure, p-Toluolsulfonsäure oder der Dodecylbenzolsulfonsäure und von Cycloalkansulfonsäuren wie Camphersulfonsäure oder Tetrafluoroborate, Hexafluorophosphate, Perchlorate, Hexafluoroantimonate, Hexafluoroarsenate oder Hexachloroantimonate.

Bevorzugt als monomere Anionen sind die Anionen der p-Toluolsulfonsäure, Methansulfonsäure oder Camphersulfonsäure.

Kationische Polythiophene, die zur Ladungskompensation Anionen als Gegenionen enthalten, werden in der Fachwelt auch oft als Polythiophen/(Poly-)Anion-Komplexe bezeichnet.

Der Gesamtanteil des elektrisch leitfähigen Polymers und Gegenions, beispielsweise in Form solcher Polymer/Gegenion-Komplexe, in der erfindungsgemäßen Dispersion liegt beispielsweise zwischen 0,05 und 10 Gew.-%, bevorzugt 0,1 und 2 Gew.-% bezogen auf das Gesamtgewicht der Dispersion.

Die erfindungsgemäßen Dispersionen können ein oder mehrere Dispersionsmittel enthalten. Als Dispersionsmittel seien beispielsweise folgende Lösungsmittel genannt: aliphatische Alkohole wie Methanol, Ethanol, i-Propanol und Butanol; aliphatische Ketone wie Aceton und Methylethylketon; aliphatische Carbonsäureester wie Essigsäureethylester und Essigsäurebutylester; aromatische Kohlenwasserstoffe wie Toluol und Xylol; aliphatische Kohlenwasserstoffe wie Hexan, Heptan und Cyclohexan; Chlorkohlenwasserstoffe wie Dichlormethan und Dichlorethan; aliphatische Nitrile wie Acetonitril, aliphatische Sulfoxide und Sulfone wie Dimethylsulfoxid und Sulfolan; aliphatische Carbonsäureamide wie Methylacetamid, Dimethylacetamid und Dimethylformamid; aliphatische und araliphatische Ether wie Diethylether und Anisol. Weiterhin kann auch Wasser oder ein Gemisch aus Wasser mit den vorgenannten organischen Lösungsmitteln als Dispersionsmittel verwendet werden.

Bevorzugte Dispersionsmittel sind Wasser oder andere protische Lösungsmittel wie Alkohole, z.B. Methanol, Ethanol, i-Propanol und Butanol, sowie Mischungen von Wasser mit diesen Alkoholen, besonders bevorzugtes Lösungsmittel ist Wasser.

Die Dispersion kann außerdem weitere Komponenten enthalten wie oberflächenaktive Substanzen, z.B. ionische und nichtionische Tenside oder Haftvermittler enthalten, wie z.B. organofunktionelle Silane bzw. deren Hydrolysate, z.B. 3-Glycidoxypropyltrialkoxysilan, 3-Aminopropyltriethoxyilan, 3-Mercaptopropyl-trimethoxysilan, 3-Methacryloxypropyltrimethoxysilan, Vinyltrimethoxysilan oder Octyltriethoxysilan.

Die erfindungsgemäßen Dispersionen können weitere Additive enthalten, die die Leitfähigkeit steigern, wie z.B. ethergruppenhaltige Verbindungen, wie z.B. Tetrahydofuran, lactongruppenhaltige Verbindungen wie γ-Butyrolacton, γ-Valerolacton, amid- oder lactamgruppenhaltige Verbindungen wie Caprolactam, N-Methylcaprolactam, N,N-Dimethylacetamid, N-Methylacetamid, N,N-Dimethylformamid (DMF), N-Methylformamid, N-Methylformanilid, N-Methylpyrrolidon (NMP), N-Octylpyrrolidon, Pyrrolidon, Sulfone und Sulfoxide, wie z.B. Sulfolan (Tetramethylensulfon), Dimethylsulfoxid (DMSO), Zucker oder Zuckerderivate, wie z.B. Saccharose, Glucose, Fructose, Lactose, Zuckeralkohole wie z.B. Sorbit, Mannit, Furanderivate, wie z.B. 2- Furancarbonsäure, 3-Furancarbonsäure, und/oder Di- oder Polyalkohole, wie z.B. Ethylenglycol, Glycerin, Di- bzw. Triethylenglycol,. Besonders bevorzugt werden als leitfähigkeitserhöhende Additive Tetrahydrofuran, N-Methylformamid, N-Methylpyrrolidon, Ethylenglycol, Dimethylsulfoxid oder Sorbit eingesetzt.

Die erfindungsgemäßen Dispersionen können außerdem ein oder mehrere in organischen Lösungsmitteln lösliche oder wasserlösliche organische Bindemittel wie Polyvinylacetat, Polycarbonat, Polyvinylbutyral, Polyacrylsäureester, Polyacrylsäureamide, Polymethacrylsäureester, Polymethacrylsäureamide, Polystyrol, Polyacrylnitril, Polyvinylchlorid, Polyvinylpyrrolidone, Polybutadien, Polyisopren, Polyether, Polyester, Polyurethane, Polyamide, Polyimide, Polysulfone, Silicone, Epoxidharze, Styrol/Acrylsäureester-, Vinylacetat/Acrylsäureester- und Ethylen/Vinylacetat-Copolymerisate, Polyvinylalkohole oder Cellulosen enthalten.

Der Anteil des polymerem Binders in der erfindungsgemäßen Dispersion beträgt 0,1 - 90 Gew.-%, bevorzugt 0,5 - 30 Gew.-% und ganz besonders bevorzugt 0,5 - 10 Gew.-%, bezogen auf das Gesamtgewicht der Dispersion.

Gegebenenfalls kann auch ein solches gegebenenfalls in der Dispersion enthaltenes organisches Bindemittel als Dispersionsmittel fungieren, sofern dieses bei der gegebenen Temperatur flüssig ist.

Die erfindungsgemäßen Dispersionen können einen pH Wert von 1 bis 14 haben, bevorzugt ist ein pH Wert von 1 bis 8.

Zur Einstellung des pH Werts können den Dispersionen beispielsweise Basen oder Säuren zugesetzt werden. Bevorzugt sind solche Zusätze, die die Filmbildung der Dispersionen nicht beeinträchtigen und bei höheren Temperaturen, z.B. Löttemperaturen, nicht flüchtig sind, wie z.B. die Basen 2-(Dimethylamino)-ethanol, 2,2'-Iminodiethanol oder 2,2',2''-Nitrilotriethanol und die Säure Polystyrolsulfonsäure.

Die Viskosität der erfindungsgemäßen Dispersion kann je nach Aufbringungsart zwischen 0,1 und 100 000 mPa·s (gemessen bei 20°C und einer Scherrate von 100 s⁻¹) betragen. Bevorzugt beträgt die Viskosität 1 bis 10 000 mPa·s, besonders bevorzugt zwischen 10 bis 1000 mPa·s.

Die Herstellung der erfindungsgemäßen Dispersionen erfolgt, indem zunächst aus den entsprechenden Vorstufen für die Herstellung leitfähiger Polymere beispielsweise analog zu den in EP-A 440 957 genannten Bedingungen Dispersionen elektrisch leitfähiger Polymere in Gegenwart von Gegenionen hergestellt werden. Eine verbesserte Variante für die Herstellung dieser Dispersionen stellt der Einsatz von Ionentauscher zur Entfernung des anorganischen Salzgehaltes oder eines Teils davon dar. Eine solche Variante ist beispielsweise in DE-A 196 27 071 beschrieben. Der Ionentauscher kann beispielsweise mit dem Produkt verrührt werden oder das Produkt wird über eine mit Ionenaustauschersäule gefüllt Säule gefördert. Durch die Verwendung des Ionenaustauschers können beispielsweise niedrige Metallgehalte erzielt werden.

Die Teilchengröße der Teilchen in der Dispersion kann nach der Entsalzung beispielsweise mittels eines Hochdruckhomogenisators verringert werden. Dieser Vorgang kann auch wiederholt werden um den Effekt zu vergrößern. Besonders hohe Drücke zwischen 100 und 2000 bar haben sich dabei als vorteilhaft erwiesen, um die Teilchengröße stark zu reduzieren.

Auch eine Herstellung des Polyanilin/Polyanion-, Polypyrrol/Polyanion oder Polythiophen/Polyanion-Komplexes und anschließende Dispergierung oder Redispergierung in einem oder mehreren Dispersionsmittel(n) ist möglich.

Der Feststoffanteil der Teilchen des elektrisch leitfähigen Polymer/Gegenion-Komplexes in diesen Dispersionen beträgt beispielsweise 0,1 bis 90 Gew.-%, bevorzugt 0,5 bis 30 Gew.-% und ganz besonders bevorzugt 0.5 bis 10 Gew.-%, bezogen auf das Gesamtgewicht der Dispersion.

Diesen Dispersionen werden dann zur Herstellung der erfindungsgemäßen Dispersionen die weiteren Komponenten wie beispielsweise das Kondensat aus Melamin und wenigstens einer Carbonylverbindung, gegebenenfalls weiteres Dispersionsmittel sowie gegebenenfalls weitere Additive, organische Binder etc. zugegeben und beispielsweise unter Rühren vermischt.

Als Vorstufen für die Herstellung leitfähiger Polymere, im Folgenden auch als Vorstufen bezeichnet, werden beispielsweise entsprechende Monomere verstanden. Es können auch Mischungen von unterschiedlichen Vorstufen verwendet werden. Geeignete monomere Vorstufen sind beispielsweise gegebenenfalls substituierte Thiophene, Pyrrole oder Aniline, bevorzugt gegebenenfalls substituierte Thiophene, besonders bevorzugt gegebenenfalls substituierte 3,4-Alkylendioxythiophene.

Als substituierte 3,4-Alkylendioxythiophene seien beispielhaft die Verbindungen der allgemeinen Formel (III), 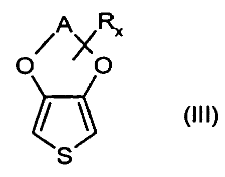 aufgeführt,
worin
- A: für einen gegebenenfalls substituierten C₁-C₅-Alkylenrest, bevorzugt für einen gegebenenfalls substituierten C₂-C₃-Alkylenrest, steht,
- R: für einen linearen oder verzweigten, gegebenenfalls substituierten C₁-C₁₈-Alkylrest, einen gegebenenfalls substituierten C₅-C₁₂-Cycloalkylrest, einen gegebenenfalls substituierten C₆-C₁₄-Arylrest, einen gegebenenfalls substituierten C₇-C₁₈-Aralkylrest, einen gegebenenfalls substituierten C₁-C₄-Hydroxyalkylrest oder einen Hydroxylrest steht,
- x: für eine ganze Zahl von 0 bis 8 steht, bevorzugt für 0 oder 1 steht und
für den Fall, dass mehrere Reste R an A gebunden sind, diese gleich oder unterschiedlich sein können,

Ganz besonders bevorzugte monomere Vorstufen sind gegebenenfalls substituierte 3,4-Ethylendioxythiophene, in bevorzugten Ausführungsformen unsubstituiertes 3,4-Ethylendioxythiophen.

Als Substituenten für die oben genannten Vorstufen, insbesondere für die Thiophene, bevorzugt für die 3,4-Alkylendioxythiophene kommen die für die allgemeine Formel (III) für R genannten Reste in Frage.

Als Substituenten für Pyrrole und Aniline kommen beispielsweise die oben aufgeführten Reste A und R und/oder die weiteren Substituenten der Reste A und R in Frage.

Als gegebenenfalls weitere Substituenten der Reste A und/oder der Reste R kommen die im Zusammenhang mit der allgemeinen Formel (I) genannten organischen Gruppen in Frage.

Verfahren zur Herstellung der monomeren Vorstufen für die Herstellung leitfähiger Polymere sind dem Fachmann bekannt und beispielsweise in L. Groenendaal, F. Jonas, D. Freitag, H. Pielartzik & J. R. Reynolds, Adv. Mater. 12 (2000) 481 - 494 und darin zitierter Literatur beschrieben.

Die erfindungsgemäßen Dispersionen eignen sich hervorragend zur Herstellung elektrisch leitfähiger oder antistatischer Beschichtungen.

Gegenstand der vorliegenden Erfindung sind somit weiterhin elektrisch leitfähige oder antistatische Beschichtungen erhältlich aus den erfindungsgemäßen Dispersionen

Zur Herstellung der erfindungsgemäßen Beschichtungen werden die erfindungsgemäßen Dispersionen beispielsweise nach bekannten Verfahren, z.B. durch Spincoating, Tränkung, Gießen, Auftropfen, Spritzen, Aufsprühen, Aufrakeln, Bestreichen oder Bedrucken, beispielsweise Ink-jet-, Sieb-, Tief-, Offset- oder Tampondrucken auf eine geeignete Unterlage in einer Nassfilmdicke von 0,5 µm bis 250 µm, bevorzugt in einer Nassfilmdicke von 2 µm bis 50 µm aufgebracht und anschließend bei wenigstens einer Temperatur von 20°C bis 200°C getrocknet.

Die erfindungsgemäßen Beschichtungen sind überraschend beständiger insbesondere gegenüber organischen Lösungsmitteln als bereits aus dem Stand der Technik bekannte Beschichtungen.

Die folgenden Beispiele dienen der beispielhaften Erläuterung der Erfindung und sind nicht als Beschränkung aufzufassen.

### Beispiele

### 1.) Herstellung erfindungsgemäßer Dispersionen:

### Beispiel 1

Es wird eine Dispersion aus
52,6 g Baytron® P (H.C.Starck GmbH, Leverkusen)
0,3 g 2-(Dimethylamino)-ethanol
31,4 g NeoRez R 9603 (Polyurethandispersion; DSM Neo Resins, Waalwijk, Niederlande)
10,5 g Acrafix® ML (partiell verethertes, modifiziertes Melaminformaldehydkondensat, Lanxess Deutschland GmbH)
2,0 g Isopropylalkohol
3,1 g N-Methylpyrrolidon
0,1 Dynol^{™} 604 (Netzmittel, Air Products)
durch Mischen unter Rühren in der angegebenen Reihenfolge hergestellt.

### Beispiel 2

Es wird eine Dispersion aus
52,6 g Baytron® P (H.C.Starck GmbH, Leverkusen)
0,3 g 2-(Dimethylamino)-ethanol
31,4 g NeoRez R 9603 (Polyurethandispersion; DSM Neo Resins, Waalwijk, Niederlande)
6,2 g Maprenal® MF 921 W (partiell verethertes, modifiziertes Melaminformaldehydkondensat, Solutia)
2,0 g Isopropylalkohol
3,1 g N-Methylpyrrolidon
0,1 Dynol^{™} 604 (Netzmittel, Air Products)
durch Mischen unter Rühren in der angegebenen Reihenfolge hergestellt.

### Beispiel 3

Es wird eine Dispersion aus
52,6 g Baytron® P (H.C.Starck GmbH, Leverkusen)
0,3 g 2-(Dimethylamino)-ethanol
31,4 g NeoRez R 9603 (Polyurethandispersion; DSM Neo Resins, Waalwijk, Niederlande)
7,5 g Setamine® MS-152 (modifiziertes Melaminformaldehydkondensat, Nuplex Resins)
2,0 g Isopropylalkohol
3,1 g N-Methylpyrrolidon
0,1 Dynol^{™} 604 (Netzmittel, Air Products)
durch Mischen unter Rühren in der angegebenen Reihenfolge hergestellt.

### Vergleichsbeispiel 1 (gemäß EP-A 564 911)

Es wird eine Dispersion aus
42,9 g Baytron® P (H.C.Starck GmbH, Leverkusen)
4,0 g Dimethylsulfoxid
0,9 g Silquest® A 187 = Glycidoxypropyltrimethoxysilan
52,2 g Isopropylalkohol
durch Mischen unter Rühren in der angegebenen Reihenfolge hergestellt.

### Vergleichsbeispiel 2

Es wird eine Dispersion aus
52,6 g Baytron® P (H.C.Starck GmbH, Leverkusen)
0,3 g 2-(Dimethylamino)-ethanol
31,4 g NeoRez R 9603 (Polyurethandispersion; DSM Neo Resins, Waalwijk, Niederlande)
5,25 g Melamin
2,0 g Isopropylalkohol
3,1 g N-Methylpyrrolidon
0,1 Dynol® 604 (Netzmittel, Air Products)
durch Mischen unter Rühren in der angegebenen Reihenfolge hergestellt.

### 2.) Herstellung von erfindungsgemäßen Beschichtungen:

### Beispiel 4

Die Dispersionen der Vergleichsbeispiele 1 und 2 und der erfindungsgemäßen Beispiele 1 bis 3 werden mit einem Handcoater in einer Nassfilmdicke von 18 µm auf eine 175 µm dicke Polyesterfolie aufgerakelt und anschließend 5 Minuten bei 130°C getrocknet.

Anschließend wird der Oberflächenwiderstand der Beschichtung in Anlehnung an ASTM gemessen und die Lösungsmittelbeständigkeit der Beschichtungen durch Reiben mit einem lösungsmittelhaltigen Lappen bestimmt.

Die Ergebnisse sind in den folgenden Tabellen zusammengefasst:
+ = lösungsmittelbeständig, die Schicht ist unzerstört
- = Lösungsmittelunbeständig, die Schicht ist zerstört.

**Tab. 1: Oberflächenwiderstand der Beschichtungen aus den Beispielen 1 bis 3 und Vergleichsbeispielen 1 und 2**

| | **Erfindungsgemäße Beispiele** | | | **Vergleichsbeispiele** | |
|---|---|---|---|---|---|
| | **1** | **2** | **3** | **4** | **5** |
| Obernächenwiderstand[Ω/sq.] | 2x10⁶ | 9x10⁶ | 8x10⁶ | 2x10³ | 8x10⁶ |

**Tab.2: Lösungsmittelbeständigkeit der Beschichtungen aus den Beispielen 1 bis 3 und Vergleichsbeispielen 1 und 2**

| | **Erfindungsgemäße Beispiele** | | | **Vergleichsbeispiele** | |
|---|---|---|---|---|---|
| **Lösungsmittel** | **1** | **2** | **3** | **4** | **5** |
| Toluol | + | + | + | - | - |
| Aceton | + | + | + | - | - |
| Methylethylketon (MEK) | + | + | + | - | - |
| Ethanol | + | + | + | - | + |
| Ethylacetat | + | + | + | - | - |
| Dimethylformamid | + | + | + | - | - |
| NaOH (10%ig in Wasser) | + | + | + | - | - |
| N-Methylpyrrolidon | + | + | + | - | - |
| Dimethylsulfoxid | + | + | + | - | - |
| Wasser | + | + | + | - | + |

Die Ergebnisse zeigen eindeutig die höhere Lösungsmittelbeständigkeit der erfindungsgemäßen Beschichtungen, die unter Verwendung der erfindungsgemäßen Dispersionen hergestellt wurden, gegenüber den Beschichtungen, die mit den Dispersionen der Vergleichsbeispiele hergestellt wurden.

## Patentansprüche

1. Dispersion enthaltend wenigstens ein elektrisch leitfähiges Polymer, wenigstens ein Gegenion und wenigstens ein Dispersionsmittel, **dadurch gekennzeichnet, dass** wenigstens ein Kondensat aus Melamin und wenigstens einer Carbonylverbindung enthalten ist.

2. Dispersion gemäß Anspruch 1, **dadurch gekennzeichnet, dass** wenigstens ein leitfähige(n) Polymer(e) ausgewählt sind aus der Gruppe der Polythiophene, Polyaniline oder Polypyrrole.

3. Dispersion gemäß Anspruch 1 oder 2, **dadurch gekennzeichnet, dass** das oder die leitfähige(n) Polymer(e) ausgewählt sind aus Polyalkylendioxythiophenen enthaltend wiederkehrende Einheiten der allgemeinen Formel (I) 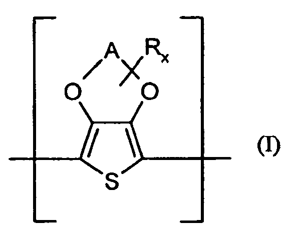 worin
A für einen gegebenenfalls substituierten C₁-C₅-Alkylenrest steht,
R für einen linearen oder verzweigten, gegebenenfalls substituierten C₁-C₁₈-Alkylrest, einen gegebenenfalls substituierten C₅-C₁₂-Cycloalkylrest, einen gegebenenfalls substituierten C₆-C₁₄-Arylrest, einen gegebenenfalls substituierten C₇-C₁₈-Aralkylrest, einen gegebenenfalls substituierten C₁-C₄-Hydroxyalkylrest oder einen Hydroxylrest steht,
x für eine ganze Zahl von 0 bis 8 steht und
für den Fall, dass mehrere Reste R an A gebunden sind, diese gleich oder unterschiedlich sein können.

4. Dispersion gemäß wenigstens einem der Ansprüche 1 bis 3, **dadurch gekennzeichnet, dass** wenigstens ein leitfähiges Polymer Poly(3,4-ethylendioxythiophen) ist.

5. Dispersion gemäß wenigstens einem der Ansprüche 1 bis 4, **dadurch gekennzeichnet, dass** das oder die Gegenionen ausgewählt sind aus Anionen polymerer Carbonsäuren oder Sulfonsäuren oder monomerer C₁-C₂₀-Alkansulfonsäuren, aliphatischen C₁-C₂₀-Perfluorsulfonsäuren, aliphatischen C₁-C₂₀-Carbonsäuren, aliphatischen C₁-C₂₀-Perfluorcarbonsäuren, aromatischen, gegebenenfalls durch C₁-C₂₀-Alkylgruppen substituierten C₁-C₂₀-Sulfonsäuren, gegebenenfalls substituierten C₁-C₂₀-Cycloalkansulfonsäuren oder Tetrafluoroboraten, Hexafluorophosphaten, Perchloraten, Hexafluoroantimonaten, Hexafluoroarsenaten oder Hexachloroantimonaten.

6. Dispersion gemäß wenigstens einem der Ansprüche 1 bis 5, **dadurch gekennzeichnet, dass** wenigstens ein Gegenion das Anion der der Polystyrolsulfonsäure ist.

7. Dispersion gemäß wenigstens einem der Ansprüche 1 bis 6, **dadurch gekennzeichnet, dass** das oder die Kondensat(e) aus Melamin und wenigstens einer Carbonylverbindung ausgewählt sind aus gegebenenfalls modifizierten und/oder gegebenenfalls partiell oder vollständig veretherten Melamin-Formaldehyd-Kondensaten.

8. Dispersion gemäß wenigstens einem der Ansprüche 1 bis 7, **dadurch gekennzeichnet, dass** das oder die Melamin-Derivat(e) in einer Menge von 1 bis 30 Gew.-% bezogen auf das Gesamtgewicht der Dispersion enthalten ist (sind).

9. Dispersion gemäß wenigstens einem der Ansprüche 1 bis 8, **dadurch gekennzeichnet, dass** die Dispersion wenigstens ein polymeres organisches Bindemittel enthält.

10. Dispersion gemäß wenigstens einem der Ansprüche 1 bis 9, **dadurch gekennzeichnet, dass** als Dispersionsmittel Wasser, aliphatische Alkohole, aliphatische Ketone, aliphatische Carbonsäureester, aromatische Kohlenwasserstoffe, aliphatische Kohlenwasserstoffe, Chlorkohlenwasserstoffe, aliphatische Nitrile, aliphatische Sulfoxide und Sulfone, aliphatische Carbonsäureamide, aliphatische und araliphatische Ether oder Mischungen aus wenigstens zwei der vorgenannten enthalten sind.

11. Verwendung der Dispersionen gemäß wenigstens einem der Ansprüche 1 bis 10 zur Herstellung elektrisch leitfähiger oder antistatischer Beschichtungen.

12. Elektrisch leitfähige oder antistatische Beschichtung erhältlich aus Dispersionen gemäß wenigstens einem der Ansprüche 1 bis 10.

## Claims

1. Dispersion comprising at least one electrically conductive polymer, at least one counter-ion and at least one dispersing agent, **characterized in that** it comprises at least one condensate of melamine with at least one carbonyl compound.

2. Dispersion according to Claim 1, **characterized in that** at least one conductive polymer is selected from polythiophenes, polyanilines or polypyrroles.

3. Dispersion according to Claim 1 or 2, **characterized in that** the conductive polymer or polymers is or are selected from polyalkylene-dioxythiophenes containing recurring units of the general formula (I) 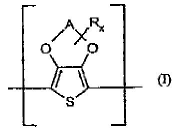 where
A represents an optionally substituted C₁-C₅-alkylene radical,
R represents a linear or branched, optionally substituted C₁-C₁₈-alkyl radical, an optionally substituted C₅-C₁₂-cycloalkyl radical, an optionally substituted C₆-C₁₄-aryl radical, an optionally substituted C₇-C₁₈-aralkyl radical, an optionally substituted C₁-C₄-hydroxyalkyl radical or a hydroxyl radical,
x represents an integer from 0 to 8, and
in the case where two or more radicals R are bonded to A, these can be identical or different.

4. Dispersion according to at least one of Claims 1 to 3, **characterized in that** at least one conductive polymer is poly(3,4-ethylenedioxy-thiophene).

5. Dispersion according to at least one of Claims 1 to 4, **characterized in that** the counter-ion or counter-ions is or are selected from anions of polymeric carboxylic acids or sulphonic acids or of monomeric C₁-C₂₀-alkanesulphonic acids, aliphatic C₁-C₂₀-perfluorosulphonic acids, aliphatic C₁-C₂₀-carboxylic acids, aliphatic C₁-C₂₀-perfluorocarboxylic acids, aromatic, optionally C₁-C₂₀-alkyl-subsLituted C₁-C₂₀-sulphonic acids, optionally substituted C₁-C₂₀-cycloalkanesulphonic acids or tetrafluoroborates, hexafluorophosphates, perchlorates, hexafluoroantimonates, hexafluoroarsenates or hexachloroantimonates.

6. Dispersion according to at least one of Claims 1 to 5, **characterized in that** at least one counter-ion is the anion of polystyrenesulphonic acid.

7. Dispersion according to at least one of Claims 1 to 6, **characterized in that** the condensate or condensates of melamine with at least one carbonyl compound is or are selected from optionally modified and/or optionally partially or completely etherified melamine-formaldehyde condensates.

8. Dispersion according to at least one of Claims 1 to 7, **characterized in that** the melamine derivative or derivatives is or are present in an amount of 1 to 30 wt.%, based on the total weight of the dispersion.

9. Dispersion according to at least one of Claims 1 to 8, **characterized in that** the dispersion comprises at least one polymeric organic binder.

10. Dispersion according to at least one of Claims 1 to 9, **characterized in that** the dispersion comprises water, aliphatic alcohols, aliphatic ketones, aliphatic carboxylic acid esters, aromatic hydrocarbons, aliphatic hydrocarbons, chlorohydrocarbons, aliphatic nitriles, aliphatic sulphoxides and sulphones, aliphatic carboxylic acid amides, aliphatic and araliphatic ethers or mixtures of at least two of the abovementioned substances as dispersing agents.

11. Use of the dispersions according to at least one of Claims 1 to 10 for the preparation of electrically conductive or antistatic coatings.

12. Electrically conductive or antistatic coating obtainable from dispersions according to at least one of Claims 1 to 10.

## Revendications

1. Dispersion contenant au moins un polymère électriquement conducteur, au moins un contre-ion et au moins un dispersant, **caractérisée en ce qu'**au moins un condensat de mélamine et d'au moins un composé carbonyle est contenu.

2. Dispersion selon la revendication 1, **caractérisée en ce qu'**au moins un polymère conductible est choisi dans le groupe des polythiophènes, des polyanilines ou des polypyrroles.

3. Dispersion selon la revendication 1 ou 2, **caractérisée en ce que** le ou les polymères conductibles sont choisis parmi les polyalkylènedioxythiophènes contenant des unités répétitives de formule générale (I) 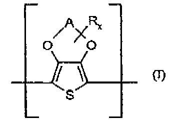 où
A représente un radical C₁-C₅-alkylène le cas échéant substitué,
R représente un radical C₁-C₁₈-alkyle linéaire ou ramifié, le cas échéant substitué, un radical C₅-C₁₂-cycloalkyle le cas échant substitué, un radical C₆-C₁₄-aryle le cas échéant substitué, un radical C₇-C₁₈-aralkyle le cas échéant substitué, un radical C₁-C₄-hydroxyalkyle le cas échéant substitué ou un radical hydroxyle,
x vaut un nombre entier de 0 à 8 et
pour le cas où plusieurs radicaux R seraient liés à A, ceux-ci peuvent être identiques ou différents.

4. Dispersion selon au moins l'une quelconque des revendications 1 à 3, **caractérisée qu'**au moins un polymère conductible est le poly(3,4-éthylènedioxythiophène).

5. Dispersion selon au moins l'une quelconque des revendications 1 à 4, **caractérisée en ce que** le ou les contre-ions sont choisis parmi les anions d'acides carboxyliques ou d'acides sulfoniques polymères ou d'acides C₁-C₂₀-alcanesulfoniques monomères, d'acides C₁-C₂₀-perfluorosulfoniques aliphatiques, d'acides C₁-C₂₀-carboxyliques aliphatiques, d'acides C₁-C₂₀-perfluorocarboxyliques aliphatiques, d'acides C₁-C₂₀-sulfoniques aromatiques, le cas échéant substitués par des groupes C₁-C₂₀-alkyle, d'acides C₁-C₂₀-cycloalcanesulfoniques le cas échéant substitués ou les tétrafluoroborates, les hexafluorophosphates, les perchlorates, les hexafluoroantimonates, les hexafluoroarsénates ou les hexachloroantimonates.

6. Dispersion selon au moins l'une quelconque des revendications 1 à 5, **caractérisée en ce qu'**au moins un contre-ion est l'anion de l'acide polystyrènesulfonique.

7. Dispersion selon au moins l'une quelconque des revendications 1 à 6, **caractérisée en ce que** le ou les condensats de mélamine et d'au moins un composé carbonyle sont choisis parmi les condensats de mélamine-formaldéhyde le cas échéant modifiés et/ou le cas échéant partiellement ou complètement éthérifiées.

8. Dispersion selon au moins l'une quelconque des revendications 1 à 7, **caractérisée en ce que** le ou les dérivés de mélamine sont contenus en une quantité de 1 à 30% en poids par rapport au poids total de la dispersion.

9. Dispersion selon au moins l'une quelconque des revendications 1 à 8, **caractérisée en ce que** la dispersion contient au moins un liant organique polymère.

10. Dispersion selon au moins l'une quelconque des revendications 1 à 9, **caractérisée en ce qu'**elle contient, comme dispersant, de l'eau, des alcools aliphatiques, des cétones aliphatiques, des esters d'acides carboxyliques aliphatiques, des hydrocarbures aromatiques, des hydrocarbures aliphatiques, des hydrocarbures chlorés, des nitriles aliphatiques, des sulfoxydes et des sulfones aliphatiques, des amides d'acides carboxyliques aliphatiques, des éthers aliphatiques ou araliphatiques ou des mélanges d'au moins deux des dispersants susmentionnés.

11. Utilisation des dispersions selon au moins l'une quelconque des revendications 1 à 10 pour la préparation de revêtements électriquement conductibles ou antistatiques.

12. Revêtement électriquement conductible ou antistatique pouvant être obtenu à partir de dispersions selon au moins l'une quelconque des revendications 1 à 10.
